# EUROPEAN PATENT SPECIFICATION

(11) **EP 1 349 152 B1**
(45) Date of publication and mention of the grant of the patent: **27.02.2013**
(21) Application number: 03006766.4
(22) Date of filing: 25.03.2003
(51) Int. Cl.: G11B 5/54, G11B 5/60

(54) **Hard disk drive having air flow accelerating device**
Festplattenlaufwerk mit Luftstömungsbeschleunigung
Disque dur avec un dispositif pour accélérer la circulation d'air

(30) Priority: 25.03.2002 KR 2002016087
(43) Date of publication of application: 01.10.2003
(73) Proprietor: Samsung Electronics Co., Ltd., Suwon-si, Gyeonggi-do, 443-742 (KR)
(72) Inventor: Kang, Tae-sik, Suwon-si, Gyeonggi-do (KR); Lee, Sang-hyub, Paldal-gu, Suwon-si, Gyeonggi-do (KR)
(74) Representative: Grünecker, Kinkeldey, Stockmair & Schwanhäusser

(56) References cited:
- US-A- 4 280 155
- US-A- 4 385 333
- US-B1- 6 356 408

## Description

### BACKGROUND OF THE INVENTION

### 1. Field of the Invention

The present invention relates to a hard disk drive, and more particularly to a hard disk drive having an air flow accelerating device to improve a feature of taking-off and landing of a slider where a magnetic head is mounted.

### 2. Description of the Related Art

A hard disk drive is one of auxiliary memory devices of a computer, to read out data stored in a magnetic disk or record data on the magnetic disk by using a magnetic head.

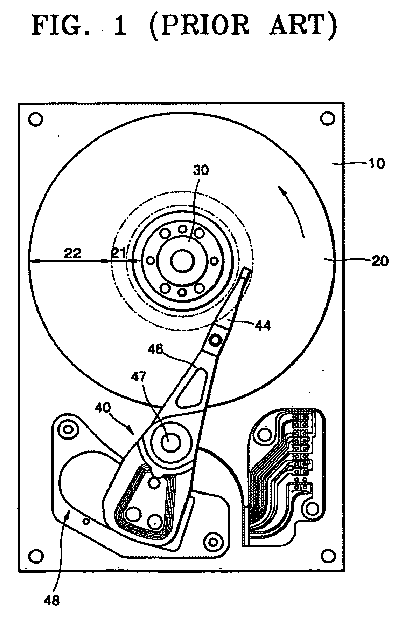

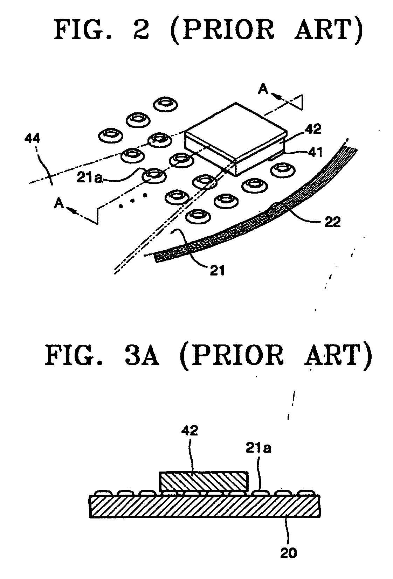

FIG. 1 is a plan view illustrating a conventional hard disk drive. FIG. 2 is an enlarged perspective view illustrating a landing zone of the disk shown in FIG. 1.

Referring to FIGS. 1 and 2, a conventional hard disk drive includes a magnetic disk (hard disk) 20 that is a recording medium for recording data, a spindle motor 30 installed on a base plate 10 for rotating the disk 20, and an actuator 40 having a magnetic head 41 for recording and reproducing data with respect to the disk 20.

The disk 20 is typically provided as one or a plurality of disks separated a predetermined distance from each other and installed to be rotated by the spindle motor 30. A landing zone 21 where the slider 42 having the magnetic head 41 mounted thereon is accommodated when power is turned off is provided at the inner circumferential side of the disk 20. A data zone 22 where a magnetic signal is recorded is provided outside the landing zone 21.

The actuator 40 can pivot around a pivot shaft 47 installed on the base plate 10 by a voice coil motor 48. The actuator 40 includes an arm 46 coupled to be capable of pivoting around the pivot shaft 47, the slider 42 having the magnetic head 41, and a suspension 44 installed at the arm 46 for supporting the slider 42 to be elastically biased toward a surface of the disk 20.

In the conventional hard disk drive having the above structure, during which data is recorded/reproduced, lift generated by the rotation of the disk 20 and an elastic force by the suspension 44 act on the slider 42 having the magnetic head 41. Accordingly, the slider 42 maintains a lifted state above the data zone 22 of the disk 20 at a height where the lift and the elastic force are balanced and record and reproduces data with respect to the disk 20. When the power is turned off and the disk 20 stops rotating, since the lift lifting the slider 42 disappears, the slider 42 needs to be out of the data zone 22 of the disk 20 in advance to prevent damage of the data zone 22 as the slider 42 contacts the data zone 22. That is, if the arm 46 of the actuator 40 pivots to be moved above the landing zone 21 of the disk 20 before the rotation of the disk 20 completely stops, even when the disk 20 stops rotating completely, since the slider 42 lands on the landing zone 21, the data zone 22 can be prevented from being damaged.

In contrast, when the power is turned on and the disk 20 begins to rotate, the lift is generated so that the slider 42 is lifted. The slider 42 in a lifted state is moved to the data zone 22 of the disk 20 as the arm 46 pivots so that the magnetic head 41 mounted on the slider 42 performs recording or reproduction data on or from the data zone 22 of the disk 20. Recently, to facilitate lift of the slider 42 by reducing a contact area between the slider 42 and the landing zone 21 of the disk 20, a plurality of bumps 21a, each having a crater shape, are formed on the landing zone 21 by a laser, as shown in FIG. 2.

FIGS. 3A through 3C show the steps in which the slider having a magnetic head mounted thereon is lifted by the rotation of the disk.

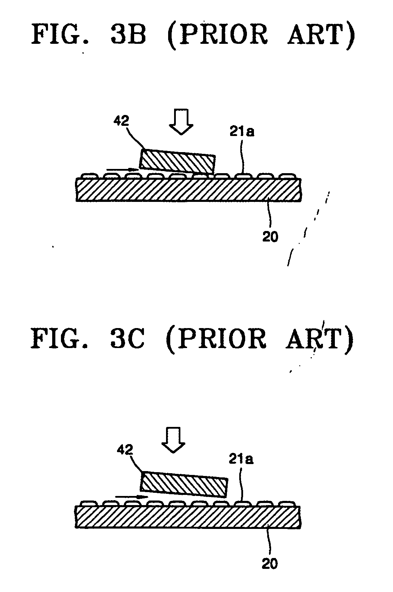

First, referring to FIG. 3A, the slider 42 is completed placed on the bumps 21 a formed on the surface of the disk 20 before the disk 20 rotates. When the power is supplied to the hard disk drive and the disk 20 is rotated, as shown in FIG. 3B, the slider 42 is gradually lifted by receiving the lift generated by the rotation of the disk 20 so that the contact area with the bumps 21a decreases. Here, since the side in which air is supplied by the rotation of the disk 20 is first lifted in the slider 42, the slider 42 is slightly inclined with a small angle. When the rotation speed of the disk 20 reaches a regular rotation speed after a few second, as shown in FIG. 3C, the slider 42 is completely lifted to maintain a predetermined distance from the surface of the disk 20. In this state, the slider 42 is moved to the data zone 22 of the disk 20 as the arm 46 shown in FIG. 1 pivots. In the meantime, when the power of the hard disk drive is turned off, the rotation of the disk 20 is stopped and then a process opposite to the above process is performed.

However, in a contact start stop (CSS) type magnetic head loading/unloading system, when the disk 20 rotates again after being stopped, the slider 42 is abraded by the surface of the disk 20 that is rotating, for a long time, until the slider 42 is completed lifted by sufficiently receiving the lift generated by the rotation of the disk 20. This problem also occurs when the disk 20 stops rotating and the slider 42 is accommodated in the landing zone 21 of the disk 20. That is, as the rotation speed of the disk 20 is gradually reduced, the lift lifting the slider 42 decreases. Thus, the slider 42 is lowered and contacts the surface of the disk 20. The slider 42 is abraded by the surface of the disk 20 for a long time so that the magnetic head 41 mounted on the slider 42 is damaged, thus deteriorating reliability of the hard disk drive. Also, particles are generated by the wearing due to the abrasion. In particular, recently, a lift height of the slider 42 is gradually reduced. Accordingly, as the distance between the bumps 21a and the slider 42 gradually decreases, the above problems becomes more serious.

US 4, 280, 155 discloses a method for improving the airflow over disk surfaces in a magnetic disk recording unit. Therefore, a vane assembly is mounted atop a disk hub. The vanes of the vane assembly are in a distance to the disk, such that the speed of flow of air is accelerated above the head and therefore the flow of air is detrimental to the lifting motion of the head.

### SUMMARY OF THE INVENTION

To solve the above-described problems, it is an object of the present invention to provide a hard disk drive having an air flow accelerating device which accelerates the speed of air flowing in between the slider and the surface of the disk to improve a feature of taking-off and landing of the slider where the magnetic head is mounted.

To achieve the above object, there is provided a hard disk drive comprising a spindle motor installed in a housing having a predetermined inner space, at least one disk for storing data which is installed at the spindle motor by the disk clamp, an actuator installed in the housing to be capable of pivoting and having a slider where a magnetic head for recording and reproducing data is mounted, and an air flow accelerating device provided at an inner circumferential side of the disk to be rotated together with the disk for accelerating a speed of the flow of air flowing in between the slider and a surface of the disk during the rotation of the disk.

It is preferred in the present invention that the air flow accelerating device comprises a ring member inserted around an outer circumference of the spindle motor. A blade can be provided outwardly extending from that device, wherein the blade extends from the ring member in a radial direction and is curved in the opposite direction to a direction in which the disk rotates.

It is preferred in the present invention that at least three blades are arranged at the same interval along the circumference of the ring member.

It is preferred in the present invention that the thickness of the blade is between 0.1 - 0.3 mm.

It is preferred in the present invention that a front surface of the blade colliding with air according to the rotation of the air flow accelerating device is inclined to form an acute angle with a surface of the disk.

It is preferred in the present invention that a plurality of disks are installed at the hard disk drive, and the air flow accelerating device is provided corresponding to a recording surface of each of the disks.

It is preferred in the present invention that a spacer is installed at an outer circumference of the spindle motor to maintain an interval between the disks, and the air flow accelerating device is installed between the disk and each of the disk clamp, the space, and the disk accommodation portion of the spindle motor, respectively.

It is preferred in the present invention that the outer circumference of the blade is greater than an outer diameter of each of the disk clamp, the spacer, and the disk accommodation portion of the spindle motor.

It is preferred in the present invention that a spacer is installed at an outer circumference of the spindle motor to maintain an interval between the disks, and the air flow accelerating device installed between the spacer and the disk is integrally formed with each of upper and lower surfaces of the space.

Thus, a feature of taking-off and landing of the slider is improved, and damage and abrasion of the magnetic head and the disk are restricted.

### BRIEF DESCRIPTION OF THE DRAWINGS

The above object and advantages of the present invention will become more apparent by describing in detail preferred embodiments thereof with reference to the attached drawings in which:
FIG. 1 is a plan view illustrating a conventional hard disk drive;
FIG. 2 is an enlarged perspective view illustrating a landing zone portion of the disk of FIG. 1;
FIGS. 3A through 3C are sectional views illustrating the step in which the slider of FIG. 2 is lifted by the rotation of the disk, taken along line A-A of FIG. 2;
FIG. 4 is an exploded perspective view illustrating a hard disk drive having an air flow accelerating device according to the present invention;
FIG. 5 is an enlarged perspective view illustrating part of the air flow accelerating device of FIG. 4;
FIG. 6 is a vertical sectional view illustrating a state in which the disk and the air flow accelerating device are coupled to the spindle motor;
FIG. 7 is a sectional view illustrating the blade, taken along line B-B of FIG. 5;
FIGS. 8 and 9 are perspective views illustrating the air flow accelerating device integrally formed with the disk clamp and the spacer, respectively;
FIG. 10 is a view for explaining the direction and speed of the flow of air formed in front of the blade of the air flow accelerating device;
FIG. 11 is a view illustrating the direction of the flow of air exhausted by the air flow accelerating device; and
FIGS. 12 and 13 are a view for explaining the effects of the flow of the air generated by the air flow accelerating device and the flow of the air generated by the rotation of the disk to the speed of lifting of the slider, and a graph indicating the relationship thereof, respectively.

### DETAILED DESCRIPTION OF THE INVENTION

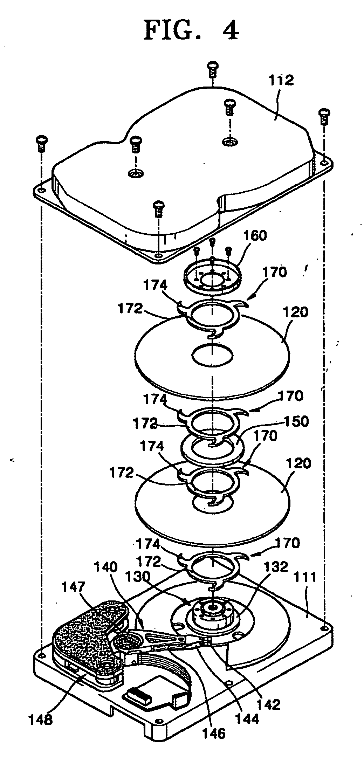

Referring to FIGS. 4 through 7, a hard disk drive according to the present invention includes a housing having a predetermined inner space. A spindle motor 130, one or a plurality of magnetic disk 120, and an actuator 140 are installed in the housing. ,

The housing is installed in a main body of a computer and formed of a base plate 111 supporting the spindle motor 130 and the actuator 140, and a cover plate 112 coupled to the base plate from the above and enclosing and protecting the disk 120. The housing is typically formed of stainless or aluminum material.

The disk 120 is generally provided as a single disk or a plurality of disks which are separated a predetermined distance from each other, and is installed to be capable of rotating by the spindle motor 130. A landing zone 121 where data is not recorded is provided at an inner circumferential surface of the disk 120. A slider 142 having a magnetic head 141 mounted thereon is accommodated in this landing zone when power is turned off, is provided at the inner circumferential surface of the disk 120. A data zone 122 where data is recorded is provided at the outer circumferential surface of the disk 120.

The spindle motor 130 for rotating the disk 120 is fixedly installed on the base plate 111. A disk clamp 160 for fixing the disk 120 to the spindle motor 130 is coupled to the upper end portion of the spindle motor 130. When a plurality of the disks 120 are installed at the spindle motor 130, a ring-shaped spacer 150 for maintaining an interval between the disks 120 is inserted between the disks 120.

The actuator 140 for recording or reproducing data on or from the disk 120 is installed on the base plate 111 to be capable of pivoting. The actuator 140 includes an arm 146 coupled to a pivot shaft 147 to be capable of pivoting around the pivot shaft 147, a voice coil motor 148 for pivoting the arm 146, and a suspension 144 for supporting the slider 142 having the magnetic head 141 to be elastically biased toward the surface of the disk 120.

An air flow accelerating device 170 that rotates together with the disk 120 is installed at the inner side of the landing zone 121 of the disk 120. The air flow accelerating device 170 accelerates a speed of air flowing in between the slider 142 and the surface of the disk 120 during the rotating of the disk 120, and includes a ring member 172 inserted around the outer circumference of the spindle motor 130 and at least one blade 174 outwardly extending, in particular in a radial direction from the ring member 172 and bending in the direction opposite to a direction in which the disk 120 rotates. The blade 174 can be provided as one blade to tens of blades, preferably, three blades 174 are arranged at the same interval along the circumference of the ring member 172, as shown in the drawing.

The blade 174 has an outer diameter D_{A} smaller than an inner diameter D_{L} of the landing zone 121 of the disk 120. This is to prevent the slider 152 when it is accommodated in the landing zone 121 of the disk 120 from colliding with the blade 174. Also, the outer diameter D_{A} of the blade 174 is preferably greater than an outer diameter of each of the disk clamp 160, the spacer 150, and a disk accommodation portion 132 of the spindle motor 130. This is to prevent that air can smoothly flow between the disk clamp 160 and the disk 120 while preventing the air remains therebetween. Consequently, the outer diameter D_{A} of the blade 174 is preferably set to be the largest within a range of not colliding with the slider 142.

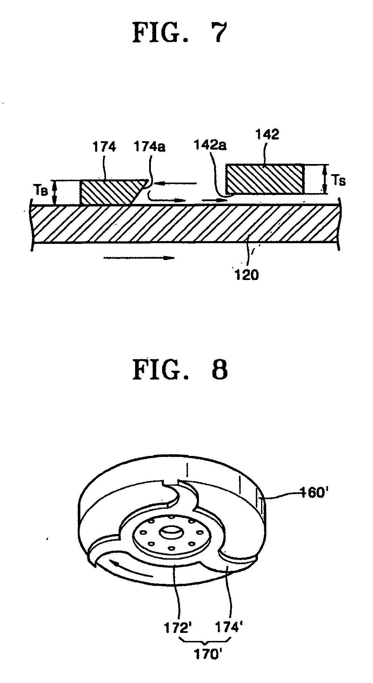

As shown in FIG. 7, a thickness T_{B} of the blade 174 is preferably not greater than a thickness T_{S} of the slider 142. For example, since the thickness T_{S} of the slider 142 is about 0.3 mm, the thickness T_{B} of the blade 174 is preferably between 0.1 - 0.3 mm. This is to prevent that part of air colliding with a front surface 174a and being exhausted to the outside flows above the slider 142. The flow of air formed above the slider 142 rather prevents lifting of the slider 142.

Also, the front surface 174a of the blade 174, with which air collides as the blade 174 rotates, preferably forms an acute angle with the surface of the disk 120. This is to guide the air colliding with the front surface 174a of the blade 174 and being exhausted to the outside to flow close to the surface of the disk 120, not above the slider 142. Thus, since most of the air generated by the blade 174 flows between the surface of the disk 120 and the bottom surface of the slider 142, that is, an air bearing surface (ABS) 142a, lift for lifting the slider 142 is greatly generated. When the front surface 174a of the blade 174 is inclined, since the air generated by the blade 174 flows toward the bottom surface of the slider 142, the thickness T_{B} of the blade 174 does not need to be smaller than the thickness T_{S} of the slider 142.

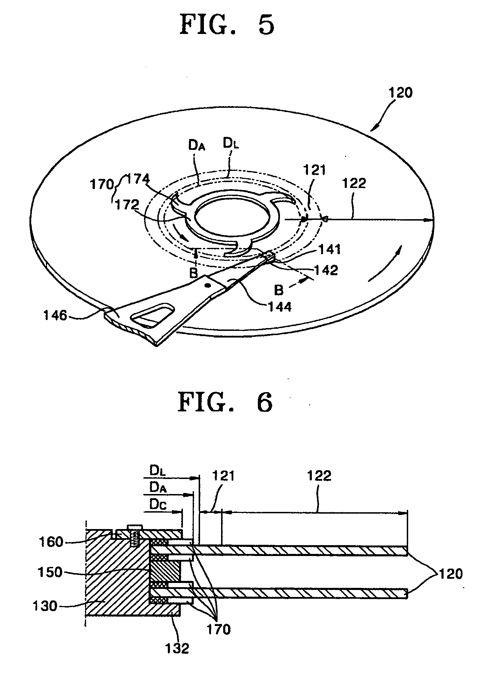

In the meantime, as shown in FIGS. 4 and 6, when a plurality of the disks 120 are installed in the hard disk drive, since the air flow accelerating device 170 are provided corresponding to each of a recording surface of the disks 120, the air flow accelerating device 170 is provided in multiple numbers as a whole. In particular, when two disks 120 are installed as shown in the drawings, a total of four air flow accelerating devices 170, each at one side of the disk 120, are installed. That is, the air flow accelerating device 170 is installed between the disk 120 and the disk clamp 160, the disk 120 and each of the upper and lower surfaces of the spacer 150, and the disk 120 and the disk accommodation portion 132 of the spindle motor 130, respectively. When a single disk is installed, although not shown, the air flow accelerating device 170 can be installed at each of both sides of the disk. In the case of using only one side of the disk as a recording surface, the air flow accelerating device 170 may be installed at the one side thereof only.

In the above description, the air flow accelerating device 170 is installed as an additional member separate from the disk 120 and the spacer 150. However, the air flow accelerating device 170 may be formed integrally with one side surface or both side surfaces of the disk 120. In this case, since the air flow accelerating device 170 can be formed together when the disk 120 is manufactured, a manufacturing step is simplified and a cost can be reduced. For example, the air flow accelerating device 170 can be formed by sputtering a predetermined substance on the surface at the inner circumference of the disk 120. Also, the air flow accelerating device 170 can be formed by forming a predetermined substance layer on the surface at the inner circumference of the disk 120 and then etching the substance layer to fit to the shapes of the ring member 172 and the blade 174.

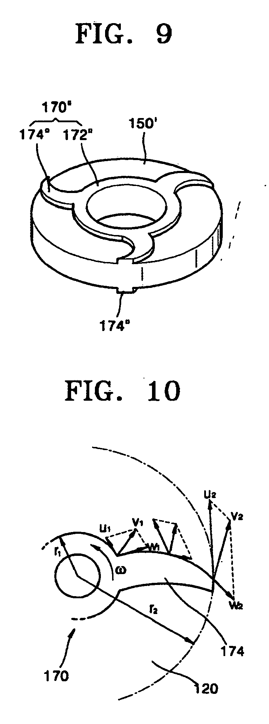

Also, as shown in FIG. 8, an air flow accelerating device 170' can be formed integrally with the bottom surface of a disk clamp 160'. In this case, the bottom surface of the disk clamp 160' is, for example, cut-processed to form a ring member 172' and a blade 174'. As shown in FIG. 9, an air flow accelerating device 170" can be formed integrally with each of the upper and lower surfaces of a spacer 150'. In this case, the upper and lower surfaces of the spacer 150' is, for example, cut-processed to form a ring member 172" and a blade 174".

The operation of the air flow accelerating device having the above structure according to the present invention will now be described with reference to FIGS. 10 through 13.

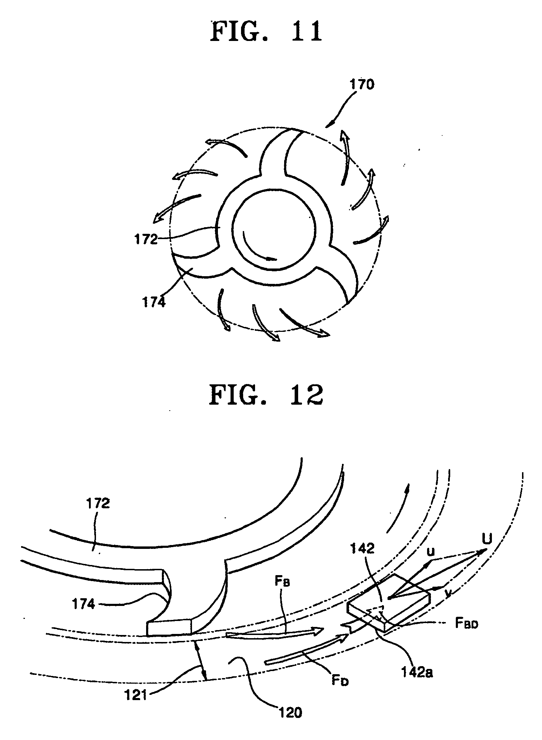

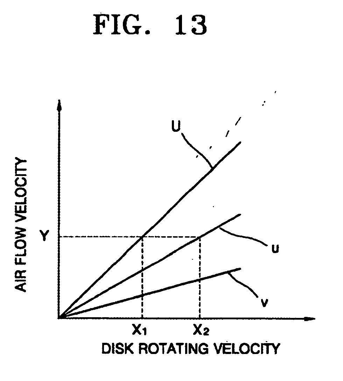

FIG. 10 is a view for explaining the direction and speed of the flow of air formed in front of the blade of the air flow accelerating device. FIG. 11 is a view illustrating the direction of the flow of air exhausted by the air flow accelerating device. FIGS. 12 and 13 are a view for explaining the effects of the flow of the air generated by the air flow accelerating device and the flow of the air generated by the rotation of the disk to the speed of lifting of the slider, and a graph indicating the relationship thereof, respectively.

Referring to FIG. 10, when the power of the hard disk drive is supplied and the disk 120 begins to rotate, the blade 174 of the air flow accelerating device 170 is rotated counterclockwise together with the disk 120. Here, the air in front of the blade 174 has a velocity component **u** proportional to a linear velocity rω of the disk 120 and a velocity component **w** directing outward according to the front surface of the blade 174 that is curved. Thus, the flow of the air formed by the blade 174 has a velocity **v** obtained by synthesizing the above two components. Here, in the velocity component **u** proportional to the linear velocity rω of the disk 120, a velocity component u₂ at the outer end portion of the blade 174 is greater than a velocity component u₁ at the inner end portion thereof. Accordingly, in the flow of the air formed by the blade 174, a speed v₂ at the outer end portion is greater than a speed v₁at the inner end portion, so that the direction of the air flow is changed to a direction in which the disk 120 rotates. This under the assumption that velocity component m, more or less, does not change in amount.

As a result, as shown in FIG. 11, the flow of the air formed by the blade 174 of the air flow accelerating device 170 is directed to the outside of the air flow accelerating device 170 and is bent to the direction in which the disk 120 rotates.

Next, referring to FIGS. 12 and 13, the flow F_{B} of the air formed at the blade 174 flows in the landing zone 121 of the disk 120 provided outside the blade 174. Here, the air meets the flow F_{D} of the air formed by the rotation of the disk 120 and having a velocity **u** proportional to the linear velocity of the disk 120. The two air flows F_{B} and F_{D} direct between the air bearing surface 142a of the slider 142 and the surface of the disk 120. Thus, since the flow F_{BD} of air under the air bearing surface 142a of the slider 142 is formed by synthesizing the above two air flows F_{B} and F_{D}, the air flow F_{BD} has a higher synthesized velocity U by vector-synthesizing the velocity **u** of the air flow F_{D} formed by the rotation of the disk 120 and the velocity **v** of the air flow F_{B} formed by the blade 174.

As described above, when the velocity U of the air flow F_{BD} flowing in under the air bearing surface 142a of the slider 142 increases, the lift lifting the slider 142 increases proportionally so that the slider 142 can more quickly lifted at a low rotation speed of the disk 120. That is, referring to FIG. 13, assuming that a speed of air flow for lifting the slider 142 is Y, when only the air flow F_{D} formed by the rotation of the disk 120 exists, the rotational speed of the disk 120 should reach X2 for the velocity u of the air flow F_{D} reach Y. In contrast, when the air flow F_{BD} of the synthesis of the two air flows F_{B} and F_{D} according to the present invention exists, if the rotational speed of the disk 120 reaches X1 lower than X2, the synthesized velocity U reaches the air flow velocity Y which can lift the slider 142. Thus, according to the present invention, the slider 142 can be lifted at a relatively lower disk rotation speed, which means that the slider 142 is lifted quite faster than that of the conventional technology. In contrast, when the slider 142 is accommodated in the landing zone 121 of the disk 120, the slider 142 can maintain a lifted state for a longer time until the rotational speed of the disk 120 is lowered compared to that of the conventional technology.

As a result, when the power is supplied to the hard disk drive, the disk 120 begins to rotate and the slider 142 accommodated in the landing zone 121 of the disk 120 is lifted faster compared to the conventional technology. When the power is turned off, the rotational speed of the disk 120 is reduced, the slider 142 stably lands on the landing zone 121. Accordingly, since the time of friction between the surface of the disk 120 and the slider 142 is reduced, damage to the disk 120 and the magnetic head 141 due to a long time friction between the disk 120 and the slider 142 is prevented and durability thereof is improved.

Also, the possibility of generation of particles due to abrasion of the disk 120 and the slider 142 is reduced. Fine particles existing on the disk 120 can be reduced by a strong air flow formed by the air flow accelerating device.

As described above, according to the hard disk drive according to the present invention, the lift speed of the slider becomes fast by the air flow accelerating device and landing thereof is stabilized. Accordingly, damage to the disk and magnetic head due to friction between the disk and the slider for a long time is reduced so that durability is improved. Also, the possibility of generation of particles due to abrasion of the disk and the slider is reduced. Furthermore, since fine particles existing on the disk can be removed by a strong air flow, a disk cleaning effect can be obtained.

While this invention has been particularly shown and described with reference to preferred embodiments thereof, it will be understood by those skilled in the art that various changes in form and details may be made therein without departing from the scope of the invention as defined by the appended claims.

## Claims

1. A hard disk drive comprising:
a spindle motor (130) installed in a housing having a predetermined inner space;
at least one disk (120) for storing data which is installed at the spindle motor (130) by the disk clamp (160);
an actuator (140) installed in the housing to be capable of pivoting and having a slider (142) where a magnetic head (141) for recording or reproducing data is mounted; and
an air flow accelerating device (170, 170', 170") to be rotated together with the disk (120), and having at least one blade (174),
**characterized in that**
the air flow accelerating device (170) is provided at an inner circumferential side of the disk (120), and
the blade (174) is adapted to accelerate a speed of the flow of air flowing in between the slider (142) and a surface of the disk (120) during the rotation of the disk (120).

2. The hard disk drive as claimed in claim 1, wherein the air flow accelerating device (170) comprises a ring member (172) inserted around an outer circumference of the spindle motor (130), and the blade (174) extending from the ring member (172) in a radial direction is curved in the opposite direction to a direction in which the disk (120) rotates.

3. The hard disk drive as claimed in claim 2, wherein at least three blades (174) are arranged at the same interval along the circumference of the ring member (172).

4. The hard disk drive as claimed in claim 1, wherein a thickness of the blade (174) is not greater than a thickness of the slider (142).

5. The hard disk drive as claimed in claim 4, wherein the thickness of the blade (174) is between 0.1 - 0.3 mm.

6. The hard disk drive as claimed in claim 1, wherein a front surface of the blade (174) colliding with air according to the rotation of the air flow accelerating device (170) is inclined to form an acute angle with a surface of the disk (120).

7. The hard disk drive as claimed in claim 1, wherein an outer diameter D_{A} of the blade (174) is smaller than an inner diameter D_{c} of a landing zone (121) provided on a surface at an inner circumference of the disk (120).

8. The hard disk drive as claimed in claim 1, wherein the air flow accelerating device (170) is installed between the disk (120) and the disk clamp (160) and between the disk (120) and a disk accommodation portion (132) of the spindle motor (130).

9. The hard disk drive as claimed in claim 8, wherein an outer diameter D_{A} of the blade (174) is greater than outer diameters D_{c} of the disk clamp (170) and the disk accommodation portion (132) of the spindle motor (130).

10. The hard disk drive as claimed in claim 1, wherein the air flow accelerating device (170) is integrally formed with a surface of the disk (120).

11. The hard disk drive as claimed in claim 1, wherein the air flow accelerating device (170') is integrally formed with a bottom surface of the disk clamp (160').

12. The hard disk drive as claimed in claim 1, wherein a plurality of disks (120) are installed at the hard disk drive, and the air flow accelerating device (170', 170") is provided corresponding to a recording surface of each of the disks (120).

13. The hard disk drive as claimed in claim 12, wherein a spacer (150) is installed at an outer circumference of the spindle motor (130) to maintain an interval between the disks (120), and the air flow accelerating device (170) is installed between the disk (120) and each of the disk clamp (160), the spacer (150), and the disk accommodation portion (132) of the spindle motor (130), respectively.

14. The hard disk drive as claimed in claim 13, wherein the outer diameter D_{A} of the blade (174) is greater than an outer diameter D_{c} of each of the disk clamp (160), the spacer (150), and the disk accommodation portion (132) of the spindle motor (130).

15. The hard disk drive as claimed in claim 12, wherein a spacer (150') is installed at an outer circumference of the spindle motor (130) to maintain an interval between the disks (120), and the air flow accelerating device (170") installed between the spacer (150') and the disk (120) is integrally formed with each of upper and lower surfaces of the spacer (150').

## Patentansprüche

1. Festplattenlaufwerk, das umfasst:
einen Spindelmotor (130), der in einem Gehäuse mit einem vorgegebenen Innenraum installiert ist;
wenigstens eine Platte (120) zum Speichern von Daten, die mittels der Platten-Klemmeinrichtung (160) an dem Spindelmotor (130) installiert ist;
einen Arm (actuator) (140), der in dem Gehäuse so installiert ist, dass er geschwenkt werden kann, und der einen Flugkörper (slider) (142) aufweist, an dem ein Magnetkopf (141) zum Aufzeichnen und Wiedergeben von Daten angebracht ist; und
eine Luftstrom-Beschleunigungseinrichtung (170, 170', 170"), die zusammen mit der Platte (120) gedreht wird und wenigstens einen Flügel (174) aufweist,
**dadurch gekennzeichnet, dass**
die Luftstrom-Beschleunigungseinrichtung (170) an einer Innenumfangsseite der Platte (120) vorhanden ist, und
der Flügel (174) so eingerichtet ist, dass er eine Geschwindigkeit des Luftstroms beschleunigt, der während der Drehung der Platte (120) zwischen dem Flugkörper (142) und einer Oberfläche der Platte (120) strömt.

2. Festplattenlaufwerk nach Anspruch 1, wobei die Luftstrom-Beschleunigungseinrichtung (170) ein Ringelement (172) umfasst, das um einen Außenumfang des Spindelmotors (130) herum aufgesetzt ist, und der Flügel (174), der sich von dem Ringelement (172) in einer radialen Richtung erstreckt, in der Richtung gekrümmt ist, die entgegengesetzt zu einer Richtung ist, in der sich die Platte (120) dreht.

3. Festplattenlaufwerk nach Anspruch 2, wobei wenigstens drei Flügel (174) im gleichen Abstand am Umfang des Ringelementes (172) angeordnet sind.

4. Festplattenlaufwerk nach Anspruch 1, wobei eine Dicke des Flügels (174) nicht größer ist als eine Dicke des Flugkörpers (142).

5. Festplattenlaufwerk nach Anspruch 4, wobei die Dicke des Flügels (174) zwischen 0,1 und 0,3 mm beträgt.

6. Festplattenlaufwerk nach Anspruch 1, wobei eine vordere Fläche des Flügels (174), die bei der Drehung der Luftstrom-Beschleunigungseinrichtung (170) mit Luft kollidiert, so geneigt ist, dass sie einen spitzen Winkel zu einer Oberfläche der Platte (120) bildet.

7. Festplattenlaufwerk nach Anspruch 1, wobei ein Außendurchmesser D_{A} des Flügels (174) kleiner ist als ein Innendurchmesser D_{C} einer Parkspur (landing zone) (121), die an einer Oberfläche an einem Innenumfang der Platte (120) vorhanden ist.

8. Festplattenlaufwerk nach Anspruch 1, wobei die Luftstrom-Beschleunigungseinrichtung (170) zwischen der Platte (120) und der Platten-Klemmeinrichtung (160) sowie zwischen der Platte (120) und einem Platten-Aufnahmeabschnitt (132) des Spindelmotors (130) installiert ist.

9. Festplattenlaufwerk nach Anspruch 8, wobei ein Außendurchmesser D_{A} des Flügels (174) größer ist als Außendurchmesser D_{C} der Platten-Klemmeinrichtung (170) und des Platten-Aufnahmeabschnitts (132) des Spindelmotors (130).

10. Festplattenlaufwerk nach Anspruch 1, wobei die Luftstrom-Beschleunigungseinrichtung (170) integral mit einer Oberfläche der Platte (120) ausgebildet ist.

11. Festplattenlaufwerk nach Anspruch 1, wobei die Luftstrom-Beschleunigungseinrichtung (170') integral mit einer unteren Fläche der Platten-Klemmeinrichtung (160') ausgebildet ist.

12. Festplattenlaufwerk nach Anspruch 1, wobei eine Vielzahl von Platten (120) an dem Festplattenlaufwerk installiert sind und die Luftstrom-Beschleunigungseinrichtung (170', 170") an einer Aufzeichnungsfläche jeder der Platten (120) vorhanden ist.

13. Festplattenlaufwerk nach Anspruch 12, wobei ein Abstandshalter (150) an einem Außenumfang des Spindelmotors (130) installiert ist, um einen Zwischenraum zwischen den Platten (120) aufrechtzuerhalten, und die Luftstrom-Beschleunigungseinrichtung (170) zwischen der Platte (120) sowie der Platten-Klemmeinrichtung (160), dem Abstandshalter (150) bzw. dem Platten-Aufnahmeabschnitt (132) des Spindelmotors (130) installiert ist.

14. Festplattenlaufwerk nach Anspruch 13, wobei der Außendurchmesser D_{A} des Flügels (174) größer ist als ein Außendurchmesser D_{C} der Platten-Klemmeinrichtung (160), des Abstandshalters (150) sowie der Platten-Aufnahmeabschnitts (132) des Spindelmotors (130).

15. Festplattenlaufwerk nach Anspruch 12, wobei ein Abstandshalter (150') an einem Außenumfang des Spindelmotors (130) installiert ist, um einen Abstand zwischen den Platten (120) aufrechtzuerhalten, und die Luftstrom-Beschleunigungseinrichtung (170"), die zwischen dem Abstandshalter (150') und der Platte (120) installiert ist, integral mit der oberen sowie der unteren Fläche des Abstandshalters (150') ausgebildet ist.

## Revendications

1. Disque dur comprenant :
- un moteur à broche (130) installé dans un boitier ayant un espace interne prédéterminé ;
- au moins un disque (120) pour stocker des données, qui est installé au niveau du moteur à broche (130) près de la pince de disque (160) ;
- un actionneur (140) installé dans le boitier, capable de pivoter et comportant un patin (142) sur lequel est montée une tête magnétique (141) pour enregistrer ou reproduire des données ; et
- un dispositif d'accélération de circulation d'air (170, 170', 170 ") destiné à être entrainé en rotation avec le disque (120) et comportant au moins une ailette (174),
- **caractérisé en ce que** :
- le dispositif d'accélération de circulation d'air (170) est disposé au niveau d'un bord circonférentiel intérieur du disque (120), et
- l'ailette (174) est adaptée à accélérer une vitesse de circulation d'air circulant entre le patin (142) et une surface du disque (120) durant la rotation du disque (120) .

2. Disque dur selon la revendication 1, dans lequel le dispositif d'accélération de circulation d'air (170) comprend un élément annulaire (172) inséré autour d'une circonférence extérieure du moteur à broche (130) et l'ailette (174), s'étendant à partir de l'élément annulaire (172) dans une direction radiale, est incurvée dans la direction opposée à celle dans laquelle tourne le disque (120).

3. Disque dur selon la revendication 2, dans lequel au moins trois ailettes (174) sont agencées au même intervalle le long de la circonférence de l'élément annulaire (172).

4. Disque dur selon la revendication 1, dans lequel une épaisseur de l'ailette (174) est inférieure ou égale à une épaisseur du patin (142).

5. Disque dur selon la revendication 4, dans lequel l'épaisseur de l'ailette (174) est comprise entre 0,1 et 0,3 mm.

6. Disque dur selon la revendication 1, dans lequel une surface avant de l'ailette (174), entrant en collision avec l'air suivant la rotation du dispositif d'accélération de circulation d'air (170), est inclinée pour former un angle aigu avec une surface du disque (120) .

7. Disque dur selon la revendication 1, dans lequel un diamètre extérieur D_{A} de l'ailette (174) est inférieur à un diamètre intérieur D_{C} d'une zone d'atterrissage (121) prévue sur une surface au niveau d'une circonférence intérieure du disque (120).

8. Disque dur selon la revendication 1, dans lequel le dispositif d'accélération de circulation d'air (170) est installé entre le disque (120) et la pince de disque (160) et entre le disque (120) et une partie d'adaptation de disque (132) du moteur à broche (130).

9. Disque dur selon la revendication 8, dans lequel un diamètre extérieur D_{A} de l'ailette (174) est supérieur aux diamètres extérieurs D_{c} de la pince de disque (160) et de la partie d'adaptation de disque (132) du moteur à broche (130).

10. Disque dur selon la revendication 1, dans lequel le dispositif d'accélération de circulation d'air (170) est formé d'un seul tenant avec une surface du disque (120).

11. Disque dur selon la revendication 1, dans lequel le dispositif d'accélération de circulation d'air (170') est formé d'un seul tenant avec une surface inférieure de la pince de disque (160').

12. Disque dur selon la revendication 1, dans lequel une pluralité de disques (120) sont installés dans le disque dur et le dispositif d'accélération de circulation d'air (170', 170") est pourvu de façon à correspondre à une surface d'enregistrement de chacun des disques (120).

13. Disque dur selon la revendication 12, dans lequel un élément d'espacement (150) est installé au niveau d'une circonférence extérieure du moteur à broche (130) afin de maintenir un intervalle entre les disques (120) et le dispositif d'accélération de circulation d'air (170) est installé entre les disques (120) et chacune des pinces de disques (160), l'élément d'espacement (150) et la partie d'adaptation de disque (132) du moteur à broche (130), respectivement.

14. Disque dur selon la revendication 13, dans lequel le diamètre extérieur D_{A} de l'ailette (174) est supérieur à un diamètre extérieur D_{c} de chacune des pinces de disques (160), de l'élément d'espacement (150) et de la partie d'adaptation de disque (132) du moteur à broche (130).

15. Disque dur selon la revendication 12, dans lequel un élément d'espacement (150') est installé au niveau d'une circonférence extérieure du moteur à broche (130) afin de maintenir un intervalle entre les disques (120) et le dispositif d'accélération de circulation d'air (170''), installé entre l'élément d'espacement (150') et le disque (120), est formé d'un seul tenant avec chacune des surfaces supérieure et inférieure de l'élément d'espacement (150').
